# FASCICULE DE BREVET EUROPEEN

(11) **EP 3 726 116 B1**
(45) Date de publication et mention de la délivrance du brevet: **24.07.2024**
(21) Numéro de dépôt: 20169692.9
(22) Date de dépôt: 15.04.2020
(51) Int. Cl.: F16L 37/091

(54) **DISPOSITIF DE RACCORDEMENT À TÉMOIN VISUEL ET TACTILE**
VERBINDUNGSVORRICHTUNG MIT BERÜHRUNGSEMPFINDLICHER UND OPTISCHER ANZEIGE
CONNECTION DEVICE WITH VISUAL AND TOUCH INDICATOR

(30) Priorité: 16.04.2019 FR 1904074
(43) Date de publication de la demande: 21.10.2020
(73) Titulaire: Parker Hannifin EMEA S.à.r.l., 1163 Etoy (CH)
(72) Inventeur: LE QUERE, Philippe, 35830 BETTON (FR)
(74) Mandataire: Cabinet Boettcher

(56) Documents cités:
- EP-A1- 3 256 767
- JP-A- 2014 070 720
- JP-B2- 3 206 782

## Description

La présente invention concerne le domaine du transport de fluides liquides ou gazeux et plus particulièrement un dispositif de raccordement d'un tube pourvu d'un témoin visuel et tactile d'un état d'enfoncement du tube dans le dispositif.

### ARRIERE PLAN DE L'INVENTION

Il est connu de raccorder un tube à un autre élément (autre tube, distributeur, actionneur, vanne...) d'un circuit de transport de fluide sous pression au moyen d'un dispositif de raccordement comprenant un corps délimitant un canal ayant un premier tronçon relié à l'autre élément et un deuxième tronçon agencé pour recevoir une portion d'extrémité du tube. Le deuxième tronçon est pourvu intérieurement de moyens pour y assujettir de manière étanche la portion d'extrémité de tube. Ces moyens comprennent généralement un organe d'accrochage tel qu'une pince ou une rondelle intérieurement dentée, et un élément d'étanchéité tel qu'un joint annulaire destiné à être comprimé entre une surface extérieure d'un manchon monté coaxialement dans le corps et une surface intérieure de la portion d'extrémité du tube.

La présence d'une fuite dans un circuit peut être due à une mauvaise connexion du tube dans le dispositif de raccordement. Il arrive en effet que le tube ne soit pas suffisamment emmanché dans le corps du dispositif de raccordement pour coopérer correctement avec l'élément d'étanchéité, notamment parce qu'il n'est pas facile de distinguer, lors de l'emmanchement, l'insertion du tube dans l'élément d'accrochage, l'insertion du tube dans l'élément d'étanchéité, et enfin l'arrivée du tube en butée à supposer qu'il y en ait une. Ceci est d'autant plus difficile qu'il existe de nombreux types de dispositifs de raccordement qui mettent en jeu des efforts différents et procurent à l'opérateur des sensations différentes.

Certains dispositifs de raccordement présentent un témoin d'enfoncement visuel du tube dans le dispositif. Ce témoin comprend classiquement une lumière agencée dans la paroi du corps pour permettre d'observer une position du tube dans le corps. Il est alors possible de vérifier visuellement que le tube est suffisamment emmanché dans le corps pour que la portion d'extrémité dudit tube coopère correctement avec l'élément d'étanchéité du dispositif de raccordement.

Néanmoins, il arrive que la lumière du corps ne soit pas visible par l'opérateur, notamment en raison d'une accessibilité limitée au dispositif de raccordement. Il serait donc intéressant de pouvoir vérifier au toucher que le tube est correctement emmanché dans le corps du dispositif de raccordement.

Un dispositif de raccordement de l'art antérieur est connu de JP3206782 B2.

### OBJET DE L'INVENTION

L'invention a donc pour objet de proposer un dispositif de raccordement d'un tube équipé d'un témoin d'enfoncement tactile permettant de s'assurer, de manière simple et fiable, que le tube est correctement emmanché dans le corps du dispositif de raccordement.

### RESUME DE L'INVENTION

A cet effet, l'invention propose un dispositif de raccordement d'un tube comprenant :
- un corps tubulaire délimitant un logement d'accueil qui est agencé pour recevoir une portion d'extrémité du tube et qui est pourvu intérieurement d'un élément d'étanchéité ;
- un témoin d'enfoncement d'une portion d'extrémité du tube dans le corps tubulaire est agencé dans le logement d'accueil pour se déplacer axialement entre une position inactive dans laquelle il est masqué par le corps tubulaire et une position active dans laquelle il s'étend en saillie du corps tubulaire ; et
- des moyens de rappel élastique du témoin d'enfoncement dans la position inactive.

Le témoin d'enfoncement est positionné dans le corps tubulaire pour que le tube amène ledit témoin d'enfoncement dans la position active lorsque la portion d'extrémité du tube est suffisamment engagée dans le logement d'accueil pour coopérer efficacement avec l'élément d'étanchéité.

Selon l'invention, les moyens de rappel élastique comprenant un ressort hélicoïdal formant une seule pièce avec le témoin d'enfoncement.

Un tel témoin d'enfoncement permet ainsi de vérifier visuellement mais aussi tactilement que le tube est correctement emmanché dans le corps du dispositif de raccordement.

Lors d'une extraction du tube, le témoin d'enfoncement est ainsi ramené dans sa position inactive en attendant une nouvelle introduction d'un tube. Le témoin d'enfoncement est ainsi réutilisable.

De manière particulière, une spire d'extrémité du ressort comprend une partie érigée vers l'extérieur dudit ressort pour se loger dans une fente axiale du corps.

De manière particulière, la partie érigée du ressort est rectiligne.

De manière particulière, la partie rectiligne du ressort est érigée radialement vers l'extérieur dudit ressort.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig. 1] la figure 1 est une vue en perspective d'un dispositif de raccordement selon un mode de réalisation particulier de l'invention, permettant de réaliser une jonction étanche entre deux tubes, un seul des deux tubes étant correctement emmanché dans le dispositif ;
[Fig. 2] la figure 2 est une vue en coupe axiale du dispositif de raccordement illustré à la figure 1 ;
[Fig. 3] la figure 3 est une vue en perspective d'un témoin d'enfoncement du dispositif illustré à la figure 2 ;
[Fig. 4a] la figure 4a est une vue schématique du témoin d'enfoncement illustré à la figure 3 ;
[Fig. 4b] la figure 4b est une vue schématique d'une première variante du témoin d'enfoncement illustré à la figure 3 ;
[Fig. 4c] la figure 4c est une vue schématique d'une deuxième variante du témoin d'enfoncement illustré à la figure 3 ;
[Fig. 4d] la figure 4d est une vue schématique d'une troisième variante du témoin d'enfoncement illustré à la figure 3.

### DESCRIPTION DETAILLEE DE L'INVENTION

L'invention est ici décrite en application au raccordement d'un premier tube 100 formant un premier conduit de transport de fluide de diamètre intérieur D100 à un deuxième tube 200 formant un deuxième conduit de transport de fluide de diamètre intérieur D200 sensiblement identique à celui du premier tube 100.

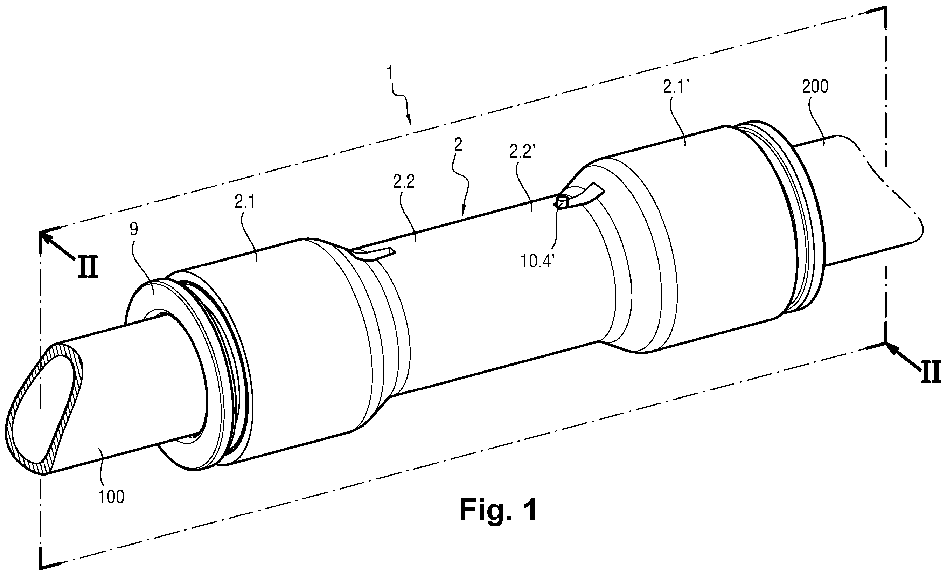

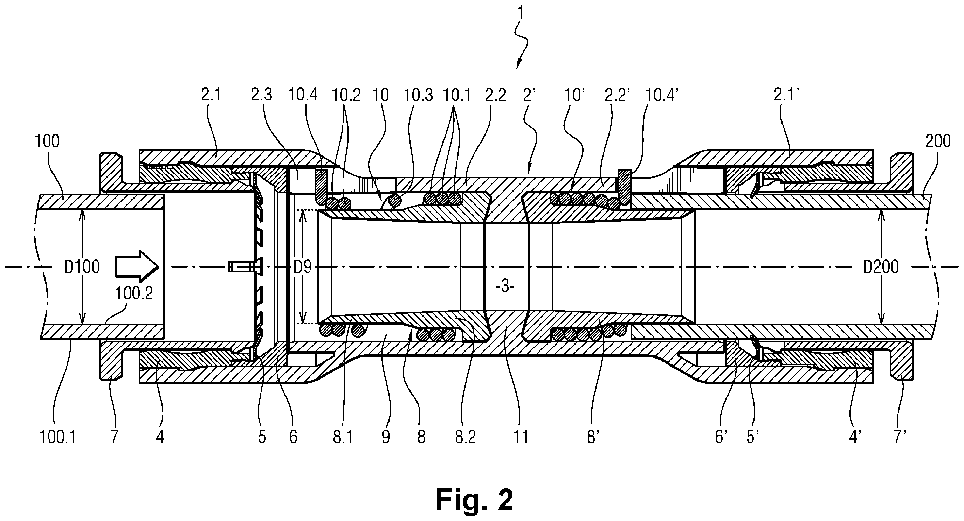

En référence aux figures 1 et 2, un dispositif de raccordement, généralement désigné en 1, comprend un corps 2 tubulaire d'épaisseur sensiblement constante délimitant un canal 3. Le corps 2 comprend, à une première extrémité, une première partie 2.1 cylindrique de grand diamètre et une deuxième partie 2.2 cylindrique de petit diamètre liées mécaniquement entre elles.

La première partie 2.1 du corps 2 reçoit des moyens d'ancrage pour assujettir une portion d'extrémité du tube 100 dans le corps 2. Ces moyens d'ancrage sont connus en eux-mêmes et comprennent ici un insert 4 dont une extrémité est associée à une rondelle 5 d'ancrage intérieurement dentée destinée à venir mordre une surface extérieure 100.1 de la portion d'extrémité du tube 100. L'extrémité de l'insert 4 et la rondelle 5 sont engagées dans une douille 6 qui est en appui contre une surface de l'extrémité libre de la première partie 2.1 du corps 2 et qui est conformée pour former une butée axiale pour la rondelle 5. L'insert 4 reçoit à coulissement un poussoir 7 tubulaire ayant un nez s'étendant au voisinage de la rondelle 5 et une extrémité de manoeuvre s'étendant en saillie à l'extérieur du corps 2. Le poussoir 7 est mobile axialement entre une position enfoncée dans laquelle le nez déforme la rondelle 5 pour en soulever les dents et une position en retrait dans laquelle le nez est écarté de la rondelle 5. Le diamètre intérieur du poussoir 7 est sensiblement égal à celui de la deuxième partie 2.2 cylindrique du corps 2 et est légèrement supérieur au diamètre extérieur de la portion d'extrémité du tube 100.

D'autres moyens d'ancrage sont utilisables, comme une pince d'accrochage ou un jonc fendu.

La deuxième partie 2.2 du corps 2 reçoit un manchon 8 d'étanchéité monté coaxialement à ladite deuxième partie 2.2. Le manchon 8 est de forme tubulaire et possède une première portion d'extrémité 8.1 et une deuxième portion d'extrémité 8.2. La deuxième portion d'extrémité 8.2 est pourvu d'une collerette de centrage. La collerette de centrage a un diamètre externe sensiblement égal au diamètre intérieur de la deuxième partie 2.2 du corps 2 et est en appui contre un épaulement annulaire 11 en saillie dans la deuxième partie 2.2 pour former une butée axiale pour le manchon 8. La collerette de centrage s'étend en saillie du reste d'une surface extérieure du manchon 8 qui s'étend en regard et à distance d'une paroi intérieure de la deuxième partie 2.2 du corps 2. La surface extérieure du manchon 8 et la paroi intérieure de la deuxième partie 2.2 définissent ainsi un logement d'accueil 9 tubulaire de la portion d'extrémité du tube 100. La première portion d'extrémité 8.1 du manchon 8 délimite une entrée du logement d'accueil 9 et la collerette de centrage de la deuxième portion d'extrémité 8.2 du manchon 8 délimite un fond du logement d'accueil 9.

La première portion d'extrémité 8.1 du manchon 8 est élastiquement déformable radialement entre un état de repos dans lequel un diamètre intérieur D9 de l'entrée du logement d'accueil 9 est légèrement supérieur au diamètre intérieur D100 du tube 100, et un état déformé dans lequel le diamètre intérieur D9 est légèrement inférieur au diamètre intérieur D100 de sorte que, lorsque la portion d'extrémité du tube 100 est reçue dans le logement d'accueil 9, la surface extérieure de la première portion d'extrémité 8.1 du manchon 8 est élastiquement appliquée contre la surface intérieure de la portion d'extrémité du tube 100 assurant ainsi une étanchéité avec celle-ci.

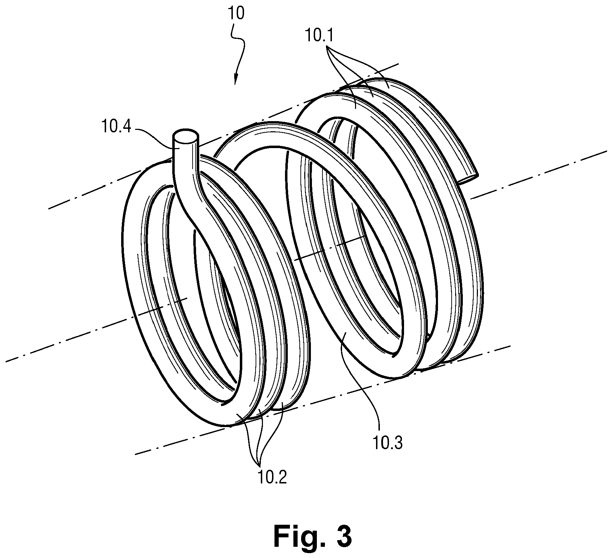

Un ressort 10 hélicoïdal de forme tronconique est monté coaxialement dans le logement d'accueil 9 pour travailler en compression. A l'état de repos, le ressort 10 s'étend de l'entrée du logement d'accueil 9 au fond de celui-ci. Le ressort 10 comprend, à une extrémité, trois spires 10.1 jointives de grand diamètre en appui contre la surface de la collerette de centrage de la deuxième portion d'extrémité 8.2 du manchon 8 formant le fond du logement d'accueil 9, et à une extrémité opposée, deux spires 10.2 jointives de petit diamètre maintenant, lorsque le ressort 10 est à l'état de repos, la première portion d'extrémité 8.1 du manchon 8 dans son état déformé. Une spire 10.3 active relie les spires 10.1 de grand diamètre aux spires 10.2 de petit diamètre. Une extrémité libre des spires 10.1 de petit diamètre est érigée radialement vers l'extérieur du ressort 10 pour former une partie rectiligne 10.4 à coupe droite (figure 3) .

La deuxième partie 2.2 du corps 2 comprend, à son extrémité reliée à la première partie 2.1, une fente 2.3 s'étendant axialement dans le corps 2 et dans laquelle passe la partie rectiligne 10.4 du ressort 10. La fente 2.3 a une largeur légèrement supérieure au diamètre de la partie rectiligne 10.4 du ressort 10. Lors d'une compression du ressort 10, la partie rectiligne 10.4 est amenée à coulisser axialement entre une position inactive dans laquelle la partie rectiligne 10.4 est reçue dans une première extrémité de la fente qui se trouve dans un renfoncement ménagé dans la première partie 2.1 du corps 2 de sorte que la partie rectiligne 10.4 est masquée à la vue dans le renfoncement, et une position active dans laquelle la partie rectiligne 10.4 se trouve vers une deuxième extrémité de la fente et s'étend en saillie de la deuxième partie 2.2 du corps 2, la spire 10.3 active étant alors ici en contact avec les spires 10.1, 10.2 jointives.

Lorsque le tube 100 est introduit dans le corps 2 du dispositif 1, la portion d'extrémité du tube 100 vient en contact des spires 10.2 du ressort 10. En poursuivant l'emmanchement du tube 100 dans le corps 2, le ressort 10 se comprime dans le logement d'accueil 9 sous la poussée du tube 100 sur les spires 10.2 et la portion d'extrémité du tube 100 est engagée sur le manchon 8 et pénètre dans le logement d'accueil 9. En l'absence des spires 10.2 à l'entrée du logement d'accueil 9, la première portion d'extrémité 8.1 du manchon 8 tend à revenir vers son état de repos et vient se plaquer contre une surface intérieure 100.2 du tube 100. L'effort élastique de plaquage ainsi obtenu permet d'assurer l'étanchéité entre le manchon 8 et la portion d'extrémité du tube 100. La pression du liquide en circulation dans le tube 100 s'applique sur la surface intérieure du manchon 8 et vient s'ajouter à l'effort élastique appliquant le manchon 8 contre la surface intérieure 100.2.

Dans le même temps, la partie rectiligne 10.4 du ressort 10 tend à se déplacer dans la fente 2.3 de sa position inactive vers sa position active pour s'étendre en saillie du corps 2 et ne plus être masquée par la première partie 2.1 dudit corps 2. La partie rectiligne 10.4 forme ainsi un témoin d'enfoncement du tube 100 dans le corps 2 permettant de s'assurer visuellement mais aussi tactilement que le tube 100 est suffisamment emmanché dans le corps 2 pour que la portion d'extrémité du tube 100 coopère efficacement avec le manchon 8 d'étanchéité. La coupe droite de l'extrémité libre de la partie rectiligne 10.4 permet de limiter les blessures susceptibles d'être provoquées au contact de ladite extrémité. On pourra prévoir de casser ou arrondir les angles au niveau de cette extrémité pour encore diminuer le risque de blessure.

En cas d'extraction du tube 100 via le poussoir 9, le ressort 10 tend à revenir à son état de repos et ramène la première portion d'extrémité 8.1 du manchon 8 dans son état déformé et la partie rectiligne 10.4 du ressort 10 dans le renfoncement de la première partie 2.1 du corps 2.

De manière similaire, le corps 2 du dispositif 1 comprend, à une deuxième extrémité, des troisième et quatrième parties 2.1', 2.2' cylindriques recevant respectivement des moyens d'ancrages 4', 5', 6', 7' et un manchon d'étanchéité 8'. Un ressort 10' identique au ressort 10 est monté coaxialement sur le manchon 8' pour permettre audit manchon 8' de passer d'un état de repos à un état déformé et ainsi accueillir une portion d'extrémité du tube 200. Comme précédemment, le ressort 10' comporte une partie rectiligne 10.4' érigée radialement vers l'extérieur du ressort 10' pour témoigner du bon emmanchement de la portion d'extrémité du tube 200 dans le corps 2. Le dispositif 1 permet ainsi de réaliser un raccordement rapide à témoins d'enfoncement entre les tubes 100, 200.

Bien entendu, l'invention n'est pas limitée aux modes de réalisation décrits mais englobe toute variante entrant dans le champ de l'invention telle que définie par les revendications.

La couleur du ressort 10 et plus particulièrement de sa partie rectiligne 10.4 pourront être choisie de façon à en faciliter son identification visuelle.

Bien qu'ici la partie 10.4 du ressort soit rectiligne et érigée radialement vers l'extérieur du ressort, elle pourra être de forme différente et érigée dans une direction différente.

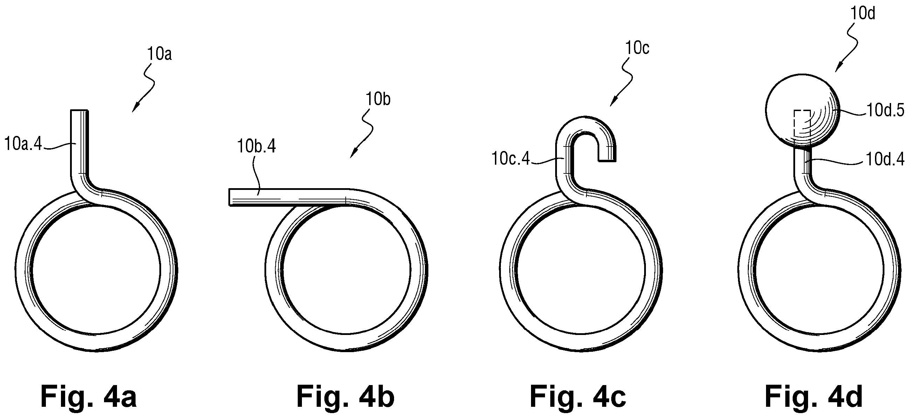

Ainsi, si la figure 4a illustre de manière schématique un ressort 10a comprenant une partie érigée 10a.4 rectiligne qui s'étend radialement vers l'extérieur du ressort 10a, la figure 4b illustre un ressort 10b comprenant une partie érigée 10b.4 rectiligne qui s'étend de façon tangentielle aux spires du ressort 10b.

La figure 4c illustre de manière schématique un ressort 10c comprenant une partie érigée 10c.4 formant une boucle qui s'étend radialement.

La figure 4d illustre de manière schématique un ressort 10d comprenant une partie érigée 10d.4 chapeauté par une boule permettant d'accentuer la perception tactile du témoin d'enfoncement. La boule peut être emmanchée en force, surmoulée, clipée....

En outre, la partie 10.4 peut s'étendre axialement dans un logement axial ménagé dans une surépaisseur du corps du raccord pour être mobile axialement entre une position rentrée dans le logement et une position en saillie du logement.

Le ressort 10 peut être métallique, plastique...

Bien qu'ici le ressort 10 soit de forme tronconique, il peut être cylindrique et comporter uniquement des spires de grand diamètre. L'étanchéité pourra alors notamment être assurée par un joint annulaire monté sur un manchon non déformable.

Bien qu'ici le ressort 10 comporte des spires jointives 10.1, 10.2, il peut comporter uniquement des spires actives.

Le témoin d'enfoncement (ici réalisé par la partie rectiligne 10.4 du ressort 10) et son moyen de rappel (ici réalisé par le ressort 10) peut être réalisé en deux pièces distinctes. La partie rectiligne 10.4 du ressort 10 peut notamment être remplacée par une rondelle pourvue d'une forme en saillie radiale, la rondelle étant en appui contre une extrémité du ressort 10.

L'étanchéité peut être assurée sur la surface extérieure du tube. Le tube peut par exemple comprendre un embout épaulé de manière qu'une partie terminale de l'embout pénètre dans un joint d'étanchéité annulaire tandis que l'épaulement agit sur le témoin d'enfoncement.

## Revendications

1. Dispositif de raccordement (1) d'un tube (100, 200) comprenant un corps (2) tubulaire délimitant logement d'accueil (9) qui est agencé pour recevoir une portion d'extrémité du tube et qui est pourvu intérieurement d'un élément d'étanchéité (8), et au moins un témoin d'enfoncement (10.4) d'une portion d'extrémité du tube dans le corps tubulaire agencé dans le logement d'accueil pour se déplacer axialement entre une position inactive dans laquelle il est masqué par le corps tubulaire et une position active dans laquelle il s'étend en saillie du corps tubulaire, et des moyens de rappel élastique du témoin d'enfoncement dans la position inactive, le témoin d'enfoncement étant positionné dans le corps tubulaire pour que le tube amène ledit témoin d'enfoncement dans la position active lorsque la portion d'extrémité du tube est suffisamment engagée dans le logement d'accueil pour coopérer efficacement avec l'élément d'étanchéité, **caractérisé en ce que** les moyens de rappel élastique comprennent un ressort (10) hélicoïdal formant une seule pièce avec le témoin d'enfoncement.

2. Dispositif de raccordement selon la revendication 1, dans lequel une spire d'extrémité du ressort (10) comprend une partie (10.4) érigée vers l'extérieur dudit ressort pour se loger dans une fente (2.3) axiale du corps (2).

3. Dispositif de raccordement selon la revendication 2, dans lequel la partie érigée (10.4) du ressort (10) est rectiligne.

4. Dispositif de raccordement selon la revendication 3, dans lequel la partie rectiligne (10.4) du ressort est érigée radialement vers l'extérieur dudit ressort (10).

## Patentansprüche

1. Verbindungsvorrichtung (1) zum Verbinden eines Rohrs (100, 200), die ein rohrförmiges Gehäuse (2) umfasst, das eine Aufnahme (9) begrenzt, die ausgebildet ist, einen Endabschnitts des Rohrs aufzunehmen, und die innen mit einem Dichtungselement (8) versehen ist, sowie mindestens eine Versenkungsanzeige (10.4) zum Anzeigen des Versenkens eines Endabschnitts des Rohrs in dem rohrförmigen Gehäuse, die in der Aufnahme angeordnet ist, um sich axial zwischen einer inaktiven Position, in der sie von dem rohrförmigen Gehäuse verdeckt ist, und einer aktiven Position, in der sie aus dem rohrförmigen Gehäuse vorsteht, zu bewegen, und Mittel zum elastischen Rückstellen der Versenkungsanzeige in die inaktive Position, wobei die Versenkungsanzeige in dem rohrförmigen Gehäuse so positioniert ist, dass das Rohr die genannte Versenkungsanzeige in die aktive Position mitnimmt, wenn der Endabschnitt des Rohrs ausreichend in die Aufnahme eingeführt ist, um wirksam mit dem Dichtungselement zusammenzuwirken, **dadurch gekennzeichnet, dass** die Mittel zum elastischen Rückstellen eine Schraubenfeder (10) umfassen, die mit der Versenkungsanzeige ein Stück bildet.

2. Verbindungsvorrichtung nach Anspruch 1, bei der eine Endwindung der Feder (10) einen Teil (10.4) umfasst, der zur Außenseite der Feder aufgerichtet ist, um sich in einem axialen Schlitz (2.3) des Gehäuses (2) anzuordnen.

3. Verbindungsvorrichtung nach Anspruch 2, bei der der aufgerichtete Teil (10.4) der Feder (10) geradlinig ist.

4. Verbindungsvorrichtung nach Anspruch 3, bei der der geradlinige Teil (10.4) der Feder radial zur Außenseite der genannten Feder (10) hin aufgerichtet ist.

## Claims

1. Connection device (1) for a pipe (100, 200) comprising a tubular body (2) delimiting a reception housing (9) which is arranged to receive an end portion of the pipe and which is provided internally with a sealing element (8), and at least one indicator (10.4) of the penetration of an end portion of the pipe into the tubular body arranged in the reception housing to move axially between an inactive position in which it is hidden by the tubular body and an active position in which it projects from the tubular body, and means for elastically returning the penetration indicator into the inactive position, the penetration indicator being positioned in the tubular body so that the pipe brings said penetration indicator in the active position when the end portion of the pipe is sufficiently engaged in the reception housing to cooperate effectively with the sealing element, **characterised in that** the elastic return means comprise a helical spring (10) integrally with the penetration indicator.

2. Connection device according to claim 1, wherein an end turn of the spring (10) comprises a part (10.4) erected toward the outside of said spring to be housed in an axial slot (2.3) of the body (2).

3. Connection device according to claim 2, wherein the erected part (10.4) of the spring (10) is rectilinear.

4. Connection device according to claim 3, wherein the rectilinear part (10.4) of the spring is erected radially towards the outside of said spring (10).
